# EUROPÄISCHE PATENTSCHRIFT

(11) **EP 0 517 127 B1**
(45) Veröffentlichungstag und Bekanntmachung des Hinweises auf die Patenterteilung: **17.03.1999**
(21) Anmeldenummer: 92109171.6
(22) Anmeldetag: 01.06.1992
(51) Int. Cl.: F16L 55/10

(54) **Not-Trenn-Sicherheitskupplung**
Emergency break-away coupling
Accouplement séparable de secours

(30) Priorität: 03.06.1991 DE 9106778 U; 12.11.1991 DE 9114005 U
(43) Veröffentlichungstag der Anmeldung: 09.12.1992
(73) Patentinhaber: ROBERT VON KEITZ KG, 65534 Limburg (DE)
(72) Erfinder: Von Keitz, Robert, W-6250 Limburg (DE)
(74) Vertreter: Wolf, Günter, Dipl.-Ing.

(56) Entgegenhaltungen:
- EP-A- 0 080 136
- EP-A- 0 096 209
- DE-A- 2 717 135
- DE-A- 3 229 066
- FR-A- 2 490 313
- GB-A- 2 128 701

## Beschreibung

Die Erfindung betrifft eine Not-Trenn-Sicherheitskupplung gemäß Oberbegriff der Patentansprüche 1, 6 und 7.

Eine derartige trennbare Kupplung ist bspw. nach der EP-A-0096209 bekannt. Diese Kupplung ist gewissermaßen nach dem "Bremsbackenanlageprinzip" ausgebildet, d.h., an zwei auf einer Seite gelenkig verbundenen Spannhebeln, zwischen denen an ihren anderen Enden ein schwenk- und auslösbarer Verbindungshebel angeordnet ist, sind als Halteelemente "Klemmbacken" angelenkt, die in Spannstellung die Kupplungshälften zusammenhalten. Abgesehen davon, daß der Auslösung des Verbindungshebels eine VentilSchließung mit dem gleichen Element vorausgehen muß, kann aufgrund der Ausbildung der ganzen Stell- und Spannmechanik keine schlagartige Öffnung der Kupplung erfolgen, weil sich die "Klemmbacken" von oben nach unten, d.h., zur Gelenkanbindung der beiden Spannhebel hin, nacheinander radial von den Anschlußflanschen der beiden Kupplungsteile abheben.

Verwiesen sei auch noch auf eine Sicherheitskupplung nach der DE-U-8801272, die insofern noch den Nachteil hat, als deren automatische Entkupplung nur dann gewährleistet wird, wenn die Entkupplungsbelastung (Zug oder Druck) im wesentlichen in Richtung der Kupplungslängsachse wirkt, was bei zu großem Innendruck zwar immer gewährleistet ist, nicht aber dann, wenn ein Tanklastwagen bei versehentlich unterbliebener Abkupplung der Schlauchleitung bspw. in einem ungünstigen Winkel zur Längsachse der Sicherheitskupplung wegfährt. Außerdem ist in sonstigen Gefahrensfällen keine schnelle Entkupplung von Hand möglich.

Ausgehend von einer Sicherheitskupplung der eingangs genannten Art liegt der Erfindung die Aufgabe zugrunde, eine solche Kupplung auf einfache Weise dahingehend zu verbessern, daß diese schlagartig entkuppelbar ist.

Diese Aufgabe ist mit einer Kupplung der eingangs genannten Art nach der Erfindung durch die im Kennzeichen des Patentanspruches 1 angeführten Merkmale gelöst. Diesbezüglich vorteilhafte Weiterbildungen ergeben sich nach den abhängigen Ansprüchen 2 bis 5 und zwei weitere Lösungen nach den unabhängigen Ansprüchen 6 und 7.

Im übrigen sei darauf hingewiesen, daß es sich bei der erfindungsgemäßen Sicherheitskupplung nicht um die Kupplung handelt, mit der Leitungsteile miteinander gekuppelt und entkuppelt werden, sondern es handelt sich um ein Sicherheitsglied in Form einer Kupplung, das natürlich zweckmäßig am stationären Teil einer Betankungsanlage angeordnet wird und nicht im Zuge einer Schlauchleitung eines zu betankenden Tankfahrzeugs, was aber im übrigen auch möglich wäre.

Die grundsätzliche, erfindungsgemäße Ausbildung, nämlich derart, daß außen an den Anschlußrändern der Kupplungsteile je eine Ringnut angeordnet ist, in die die Schenkel von mindestens zwei Ringteilen mit entsprechendem Innendurchmesser eingreifen, welche sich zu einem Ring ergänzenden Ringteile von dem einen Halte- und Spannring umfaßt sind, sorgt dafür, daß bei allen ungünstigen Belastungsfällen, aber auch gewollt bei Notfällen der Halte- und Spannring die Ringteile freigibt, diese damit ihre Haltefunktion in bezug auf die beiden Kupplungsteile verlieren und die Kupplungsteile schlagartig auseinanderfallen. Die Lösung des Halte- und Spannringes und damit die Freigabe der Ringteile kann dabei auf verschiedene Weise erfolgen, und zwar in Abhängigkeit davon, ob man eine selbsttätige oder eine willkürliche Auslösung wünscht, was im einzelnen noch näher erläutert wird.
Um ein sicheres Abfallen der Ringteile zu gewährleisten, ist ferner allen Ausführungsformen eigen, daß die Ringnuten mit angeschrägten Seitenflächen und die Schenkel der Halteringabschnitte mit entsprechend angeschrägten Flächen versehen sind.

Die erfindungsgemäßen Sicherheitskupplungen werden nachfolgend anhand der zeichnerischen Darstellung von Ausführungsbeispielen näher erläutert.

Es zeigt schematisch
- Fig. 1: teilweise im Schnitt und in Ansicht eine Sicherheitskupplung mit ihren beiden Hauptteilen;
- Fig. 2: in Ansicht die beiden Ringteile;
- Fig. 3: einen Teilschnitt durch einen Halbring in angelegtem Zustand an einem zweigeteilten Kupplungsteil;
- Fig. 4: in Ansicht das zweigeteilte Kupplungsteil mit den Abzugselementen in Form von Zugsträngen;
- Fig. 5: einen Längsschnitt durch eine andere Ausführungsform der Sicherheitskupplung;
- Fig. 6: in Draufsicht Anordnung und Ausbildung eines Abzugshebels der Sicherheitskupplung gemäß Fig. 5;
- Fig. 7-9: weitere Ausführungsformen von Sicherheitskupplungen im Längsschnitt;
- Fig. 10: in axialer Ansicht drei zu einem geschlossenen Ring zusammengestellte Ringteile und
- Fig. 11: vergrößert einen Schnitt durch den Trennbereich der Kupplungsteile.

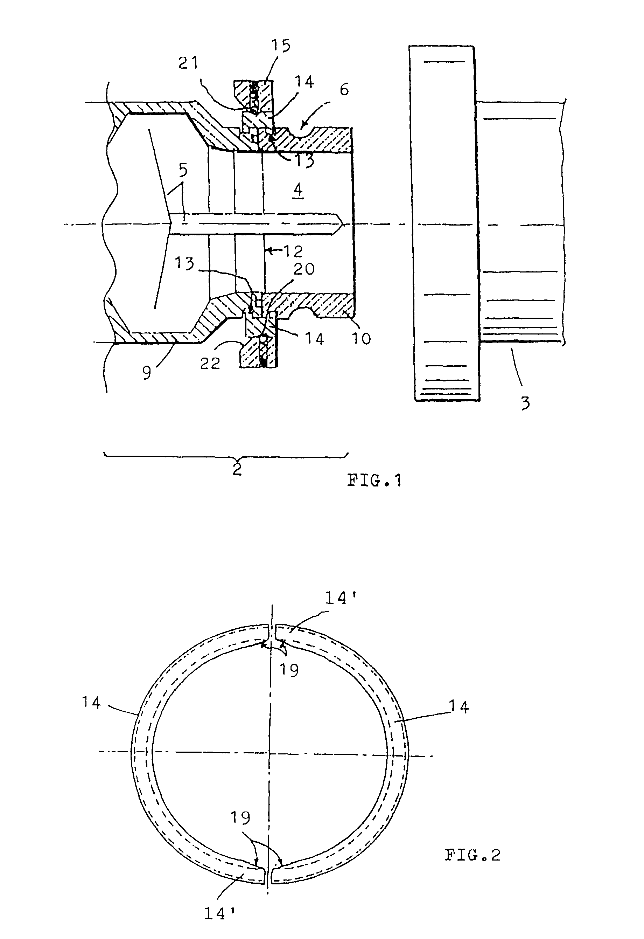

Beim Ausführungsbeispiel nach Fig.1 bis 4 besteht die Sicherheitskupplung aus zwei ineinandersteckbaren, durch in Führungen sitzenden und in Schließstellung fixierbaren Kugeln (nicht dargestellt) gegeneinander verrastbaren Kupplungsteilen 2,3, wobei die Teile mit je einem im Durchströmkanal 4 angeordneten Schließventil 5 und das kugel freie Teil 2 mit einer Kugeleingriffsringnut 6 versehen ist, und wobei ferner die Kugeln in radial zur Kupplungslängsachse 7 orientierten Kanälen des einen Kupplungsteiles 3 angeordnet sind. Das im Teil 3 befindliche Schließventil 5 und die Kugelaufnahmekanäle sind nicht dargestellt.

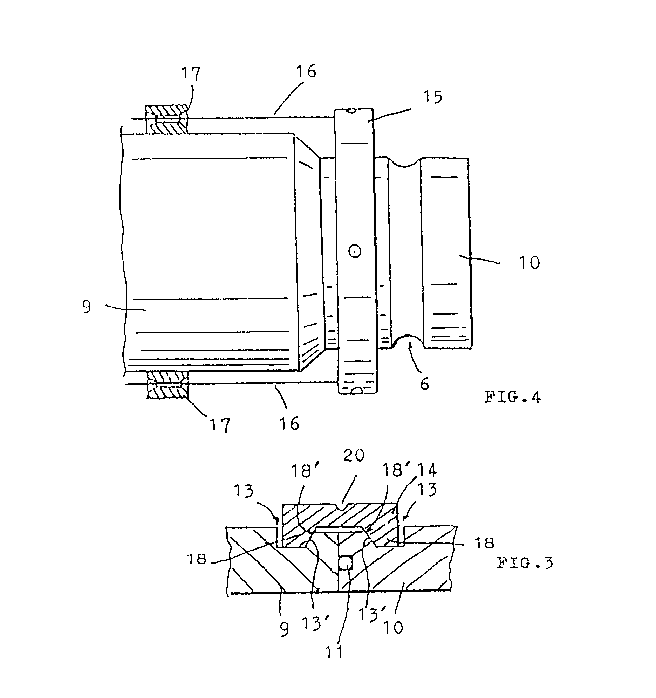

Diese Sicherheitskupplung ist nun gemäß Ausführungsbeispiel bezüglich ihres Kupplungsteiles 2 derart ausgebildet, daß dieses Teil 2 aus zwei Teilen 9, 10 gebildet ist, die benachbart zur mit Dichtung 11 versehenen Anschlußfläche 12 mit je einer umlaufenden Ringnut 13 versehen sind, in welche Ringnuten 13 zwei entsprechend profilierte und bemessene, als Halbringe ausgebildete Spannelemente 14 eingreifen, die von einem an den Spannelementen 14 lösbar verrasteten Halte- und Spannring 15 umspannt sind, an dem zwei Zugstränge 16 als Abzugselemente diametral gegenüber befestigt sind, die mit zwei entsprechend am eingriffsringnutfreien Teil 9 angeordneten Führungselementen 17 (siehe Fig. 4) in Wirkverbindung stehen.

Die nachfolgend beschriebenen Einzelheiten dienen dazu, das schlagartige Öffnen der Sicherheitskupplung mit absoluter Sicherheit zu gewährleisten und zu erleichtern. In Rücksicht darauf sind die beiden Spannelemente 14 bzw. Ringteile an ihren Eingriffsstegen 18 im Bereich ihrer Enden 14' mit Anschrägungen 19 versehen. Ferner sind die Ringnuten 13 mit angeschrägten Flächen 13' und die Eingriffsstege 18 der Spannelemente 14 mit entsprechend angeschrägten Flächen 18' ausgestattet, und schließlich ist der Halte- und Spannring 15 zur Abzugsseite hin mit einer angeschrägten Seitenflanke 22 versehen. Im übrigen sorgen die angeschrägten Flächen 13' und 18', wie in Fig. 3 dargestellt, dafür, daß die beiden Teile 9, 10 unter Einschluß der Dichtung 11 (O-Ring) dicht zusammengedrückt werden. Die Spannelemente 14 weisen je eine Verrastungsnut 20 auf, und der Halteund Spannring 15 ist mit auf seinem Umfang gleichmäßig verteilten, federbelasteten Verrastungskugeln 21 (siehe Fig.1) versehen.

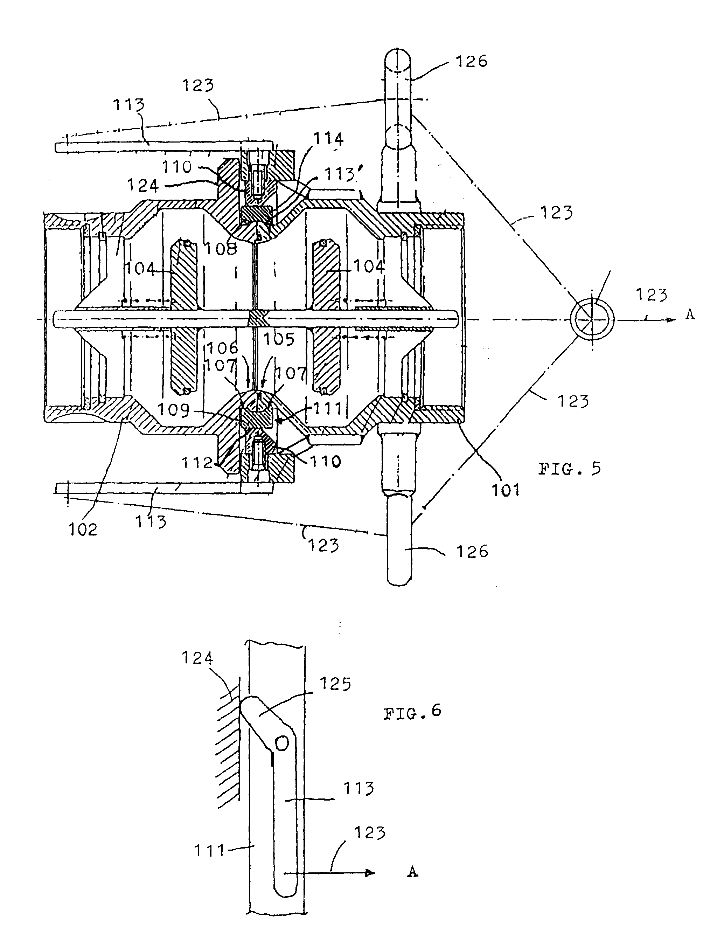

Bei den Ausführungsbeispielen nach den Fig. 5 bis 11 sind Bezugszeichen ab 100 benutzt.

Die Not-Trenn-Sicherheitskupplung besteht gemäß Fig. 5 aus zwei in Schließstellung miteinander verrastbaren Kupplungsteilen 101, 102, die mit je einem im Durchströmkanal 103 angeordneten und in Schließstellung der Kupplungsteile geöffnetem Schließventil 104 versehen sind. Für alle nachfolgend im einzelnen noch zu erörternden Ausführungsformen ist wesentlich, daß außen an den Anschlußrändern 105, 106 der Kupplungsteile 101, 102 je eine Ringnut 107 angeordnet ist, in die die Schenkel 108 von mindestens zwei die Spannelemente 114 bildenden Halteringabschnitten 109 mit entsprechendem Innendurchmesser eingreifen, welche sich zu einem Ring ergänzende Halteringabschnitte 109 mit einem Halteelement 110 umfaßt und diesem die Halteringabschnitte 109 lösbar zugeordnet sind, wobei die Ringnuten 107 mit angeschrägten Flächen 113' und die Schenkel 108 der HalteringRingabschnitte 109 mit entsprechend angeschrägten Flächen 8' versehen sind.

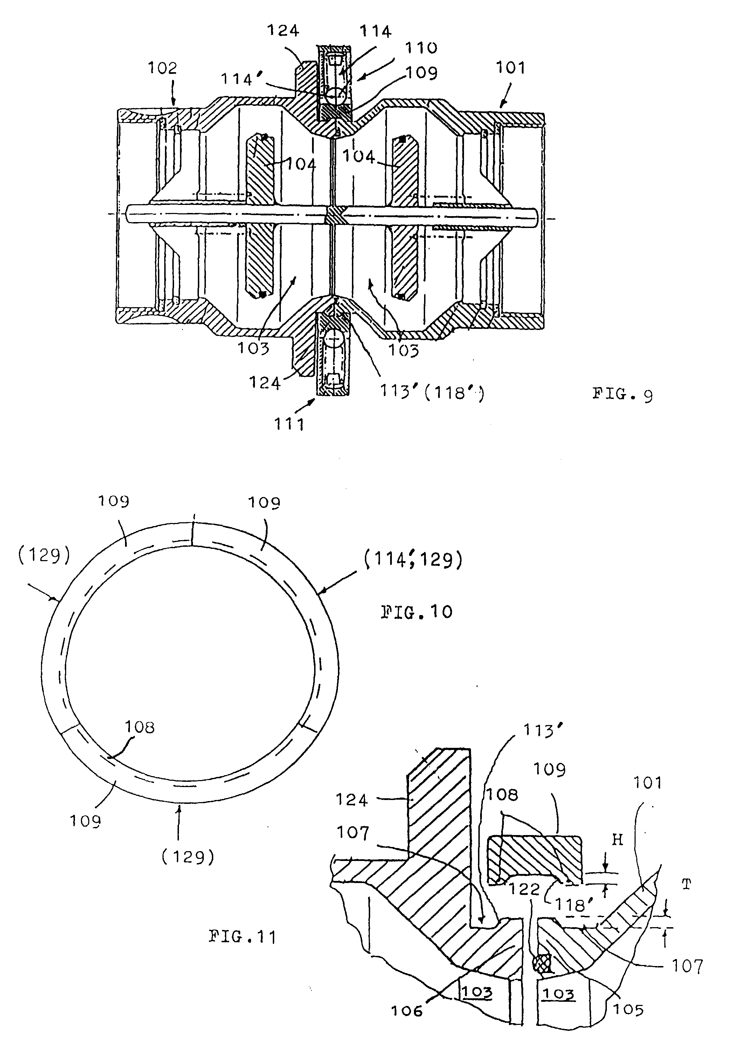

Die beiden Kupplungsteile 101, 102 werden also lediglich durch die Halteringabschnitte 109 zusammengehalten aber auch dicht zusammengepreßt, wobei die Halteringabschnitte 109 ihrerseits vom Halteelement 110 in ihrer Anpreßstellung gehalten werden. Sobald aber das Halteelement 110 seine Haltefunktion in bezug auf die Halteringabschnitte 109 nicht mehr ausübt, verlieren auch diese ihre Kupplungsfunktion in bezug auf die beiden Kupplungsteile 101, 102, die sich dadurch voneinander lösen. Wesentlich ist dabei die geneigte bzw. angeschrägte Gestaltung der beteiligten Flächen 113', 118' (siehe insbesondere Fig. 11) , die ja einerseits unter Einschluß einer Dichtung 122 die Kupplungsteile 101, 102 ausreichend fest zusammenpressen, sich aber andererseits auch leicht von den Kupplungsteilen 101, 102 bei wegfallender Radialbelastung durch das Halteelement 110 lösen müssen. Vorteilhaft ist in Rücksicht auf die auszuübende Axialbelastung im Bereich der Dichtung 122 die Höhe H der Schenkel 108 geringfügig größer bemessen als die Tiefe T der Ringnuten 107. Die Höhe H der Schenkel 108 beträgt dabei höchstens 3 bis 5 mm.

Die Ausführungsbeispiele nach den Fig. 5, 7, 8, 9 zeigen bei gleicher Grundkonzeption, wie beschrieben, unterschiedliche Ausführungsmöglichkeiten für das Halteelement 110 bzw. dessen Auslösbarkeit in bezug auf die Halteringabschnitte 109, die zu einem geschlossenen Ring zusammengestellt in Fig. 10 dargestellt sind.

Beim Ausführungsbeispiel nach Fig. 5 ist dabei das Halteelement 110 in Form eines Spannringes 111 ausgebildet, der mit seiner Innenfläche 112 an den Ringabschnitten 109 anliegt und von diesen abziehbar ausgebildet ist, wobei am Spannring 111 mindestens zwei Abzugshebel 113 in diametraler Zuordnung angeordnet sind. Ein solcher Abzugshebel 113 ist in Fig. 6 in Draufsicht dargestellt, d.h., in Fig. 5 sind diese Hebel um 90° versetzt eingezeichnet. Werden mittels des durch Ösen 126 geführten Seilzuges 123 (Reißleine) Zugkräfte (in Pfeilrichtung A) auf die Hebel 113 ausgeübt, so ziehen sie den Spannring 111 von den Halteringabschnitten 109 ab, da sich die Hebel 113, die schwenkbar am Ring 111 gelagert sind, mit ihren abgebogenen Nasen 125 an einen ringförmigen Anschlag 124 des Kupplungsteiles 102 abdrücken.

Ein ähnliches Prinzip liegt bei der Ausführungsform nach Fig.7 vor. Hierbei ist das Halteelement 110 aus mehreren, am einen oder anderen Kupplungsteil, 102, 103 gelagerten, zweiarmigen Hebeln 115 gebildet, die mit ihren kurzen Armen 116, wie dargestellt mit Anlageelementen 129 an den Halteringabschnitten 109 anliegen und deren lange Arme 117 gegen den Kupplungsteil 102 verspannt sind, an dem die Hebel 115 gelagert sind. Die Anzahl der Hebel 115 richtet sich dabei nach der Anzahl der vorhandenen Halteringabschnitte 109. Die Verspannung der Hebel 115 in dargestellter Spannstellung erfolgt hierbei mittels eines Ringes 127, der wiederum mit einem Seilzug 123 versehen ist. Bei Abzug des Ringes 127 verlieren, wie ohne weiteres vorstellbar, die Hebel 115 ihre Spannwirkung auf die jeweils mittig angepreßten Halteringabschnitte 109, und die Kupplungsteile 101, 102 fallen schlagartig auseinander.

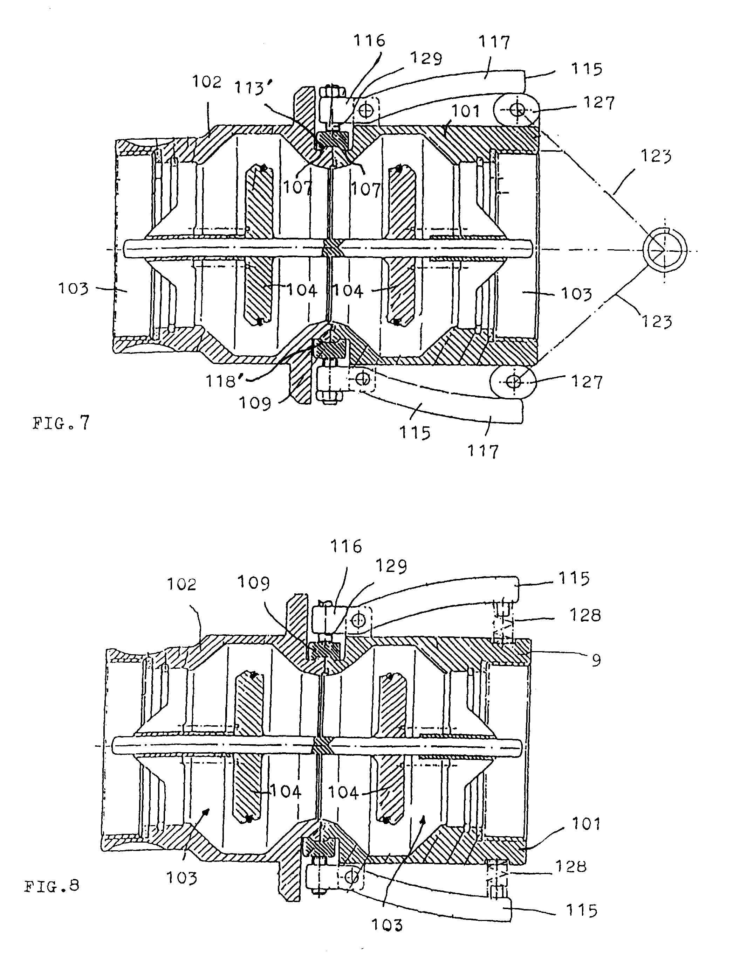

Die Ausführungsform nach Fig. 8 unterscheidet sich von der gemäß Fig. 7 nur dadurch, daß hierbei jeder Hebel 115 durch eine Feder 128 mit entsprechend bemessener Federkraft in Spannstellung gehalten wird. Wird diese vorgegebene Federkraft durch von außen oder von innen auf die Kupplung wirkenden Kräfte überschritten, geben die Hebel 115 nach, und damit werden die Halteringabschnitte 109 freigegeben. Diese Ausführungsform bedarf also keiner Auslösung durch einen Seilzug 123, was auch für die Ausführungsform nach Fig. 9 gilt, bei der das Halteelement 110 in Form eines Ringes 111 ausgebildet ist, zwischen dem und den Halteringabschnitten 109 federbelastete Spannelemente 114 in Form von Kugeln 114' angeordnet sind. Der "Ring" 111 kann hierbei auch aus Einzelabschnitten bestehen, die in geeigneter Weise am ringförmigen Anschlag 124 des Kupplungsteiles 102 befestigt sind, was auch für einen voll umlaufenden Ring 111 gilt. Die Kugeln 114' (Zapfenausbildungen sind ebenfalls möglich) müssen natürlich so bemessen sein und soweit aus dem Ring 111 herausragen, daß sich im eintretenden Notfall die Halteringabschnitte 109 radial ausreichend weit zurückstellen können, um die Kupplungsteile 101, 102 freizugeben.

## Patentansprüche

1. Not-Trenn-Sicherheitskupplung, bestehend aus zwei zusammenkuppelbaren, als Ventil ausgebildeten Kupplungsteilen (2, 3), die im Anschlußbereich je eine angeschrägte Fläche (13') aufweisen, welche Flächen (13') gemeinsam nach außen konvergierend verlaufen für die Anlage entsprechend formangepaßter, entsprechend angeschrägte Flächen (18') aufweisender Spannelemente (14), die von lösbaren Halteelementen in Spannstellung an beiden Kupplungsteilen (2, 3) gehalten sind,
**dadurch gekennzeichnet,**
daß die Spannelemente (14) aus mindestens zwei, einen Ring bildenden Ringteilen gebildet sind, die in die Schrägflächen (13') aufweisende Ringnuten (13) der beiden Kupplungsteile (2,3) eingreifen und die von einem die Halteelemente (HE) bildenden, axial von den Ringteilen abziehbaren Halte- und Spannring (15) umfaßt sind, der mit zwei diametral an ihm befestigten Abzugselementen (16) versehen ist, die durch Führungselemente (17) an einem der Kupplungsteile (2, 3) geführt sind.

2. Kupplung nach Anspruch 1,
**dadurch gekennzeichnet,**
daß die die Spannelemente (14) bildenden Ringteile im Bereich ihrer Enden (14') am Innenumfang mit Anschrägungen (19) versehen sind.

3. Kupplung nach Anspruch 1 oder 2,
**dadurch gekennzeichnet,**
daß die die Spannelemente (14) bildenden Ringteile mit je einer Verrastungsnut (20) versehen sind für den Eingriff von am Halte- und Spannring (15) gleichmäßig auf seinem Umfang verteilten, federbelasteten Verrastungskugeln (21).

4. Kupplung nach einem der Ansprüche 1 bis 3,
**dadurch gekennzeichnet,**
daß der Halte- und Spannring (15) zur axialen Abzugsseite hin mit einer angeschrägten Seitenflanke (22) versehen ist.

5. Kupplung nach einem der Ansprüche 1 bis 4,
**dadurch gekennzeichnet,**
daß am Halte- und Spannring (15,111) mindestens zwei in axialer Richtung wirkende Abzugshebel (113) in diametraler Zuordnung angeordnet und an den Abzugshebeln (113) die Abzugselemente (16,123) befestigt sind.

6. Not-Trenn-Sicherheitskupplung, bestehend aus zwei zusammenkuppelbaren, als Ventil ausgebildeten Kupplungsteilen (101,102), die im Anschlußbereich je eine angeschrägte Fläche (113') aufweisen, welche Flächen (113') gemeinsam nach außen konvergierend verlaufen für die Anlage entsprechend formangepaßter, entsprechend angeschrägte Flächen (118') aufweisender Spannelemente (114), die von lösbaren Halteelementen in Spannstellung an beiden Kupplungsteilen (101,102) gehalten sind,
**dadurch gekennzeichnet,**
daß die Spannelemente (114) aus mindestens zwei, einen Ring bildenden Ringteilen gebildet sind, die in die Schrägflächen (113') aufweisende Ringnuten (107) der beiden Kupplungsteile (101,102) eingreifen und die von einem die Halteelemente bildenden Spannring (111) umgeben sind, in dem federbelastet angeordnete Kugeln (114') die Ringteile in Spannstellung an den Kupplungsteilen (101,102) halten.

7. Not-Trenn-Sicherheitskupplung, bestehend aus zwei zusammenkuppelbaren, als Ventil ausgebildeten Kupplungsteilen (101,102), die im Anschlußbereich je eine angeschrägte Fläche (113') aufweisen, welche Flächen (113') gemeinsam nach außen konvergierend verlaufen für die Anlage entsprechend formangepaßter, entsprechend angeschrägte Flächen (118') aufweisender Spannelemente (114), die von lösbaren Halteelementen in Spannstellung an beiden Kupplungsteilen (101,102) gehalten sind,
**dadurch gekennzeichnet,**
daß die Spannelemente (114) aus mindestens zwei, einen Ring bildenden Ringteilen gebildet sind, die in die Schrägflächen (113') aufweisende Ringnuten (107) der beiden Kupplungsteile (101,102) eingreifen, wobei jedem der Ringteile ein am einen oder anderen Kupplungsteil (101,102) gelagerter, zweiarmiger Hebel (115) zugeordnet ist, welche die Halteelemente bildenden Hebel (115) mit ihren kurzen Armen (116) am jeweiligen Ringteil anliegen und mit ihren langen Armen (117) gegen das Kupplungsteil verspannt sind, an dem sie gelagert sind.

8. Kupplung nach Anspruch 7,
**dadurch gekennzeichnet,**
daß zwischen den langen Armen (117) der Hebel (115) und dem Kupplungsteil (101 oder 102), an dem sie gelagert sind, Federn (128) verspannt angeordnet sind.

9. Kupplung nach Anspruch 7,
**dadurch gekennzeichnet,**
daß zwischen den langen Armen (117) der Hebel (115) und dem Kupplungsteil (101 oder 102), an dem sie gelagert sind, ein in axialer Richtung abziehbarer Ring (127) angeordnet ist.

## Claims

1. An emergency separating safety coupling, comprising two coupling portions (2,3) adapted to be coupled together and formed as valves which, in the connecting area, are respectively provided with one beveled surface (13') each, which faces (13') jointly extend in an outwardly converging way for abutment with clamping elements (14) conforming in shape and comprising correspondingly beveled faces (18'), with the said clamping elements (14) being held on both coupling portions (2,3) in the clamping position by detachable holding elements, characterized in that the clamping elements (14) are formed of at least two annular portions forming a ring which are in engagement with the annular grooves (13) of the two coupling portions (2,3) containing the beveled faces (13') and which are embraced by a holding and clamping ring (15) forming the holding elements (HE) and being axially withdrawable from the annular portions, which holding and clamping ring is provided with two withdrawing elements (16) diametrically secured thereto and guided through guiding elements (17) on one of the coupling portions (2,3).

2. A coupling of claim 1, characterized in that the annular portions forming the clamping elements (14), in the area of their ends (14') on the inner periphery thereof, are provided with bevels (19).

3. A coupling according to claims 1 or 2, characterized in that the annular portions forming the clamping elements (14) are each provided with one locking groove (20) for engagement of spring-loaded locking balls (21) uniformly distributed on the periphery of the holding and clamping ring (15).

4. A coupling according to any one of claims 1 to 3, characterized in that the holding and clamping ring (15), toward the axial withdrawal side is provided with a beveled side flank (22).

5. A coupling according to any one of claims 1 to 4, characterized in that arranged on the holding and clamping ring (15,111), in diametrical association, are at least two withdrawing levers (113) acting in the axial direction, and that secured to the withdrawing levers (113) are the withdrawing elements (16,123).

6. An emergency separating safety coupling comprising two coupling portions (101,102) adapted to be coupled together and being configured in the form of valves which, in the connecting area, are each provided with a beveled surface (113') which surfaces (113') jointly extend in an outwardly converging way for abutment with clamping elements (114) of a conforming shape and comprising correspondingly beveled surfaces (118') which clamping elements are held by detachable holding elements in the clamping position on both coupling portions (101,102), characterized in that the clamping elements (114) are formed of at least two annular portions forming a ring which engage the annular grooves (107) of the two coupling portions (101,102) having beveled surfaces (113') and which are surrounded by a clamping ring (111) forming the holding elements in which spring-loaded balls (114') hold the annular portions in the clamping position on the coupling portions (101,102).

7. An emergency separating safety coupling comprising two coupling portions (101,102) adapted to be joined together and being configured in the form of valves, which contain, in the connecting area, one beveled surface (113') each, with the said surfaces (113') extending in an outwardly converging way for abutment with clamping elements (114) conforming in shape and having correspondingly beveled surfaces (118'), with the said clamping elements (114) on both coupling portions (101,102) being held by detachable holding elements in the clamping position, characterized in that the clamping elements (114) are formed of at least two annular portions forming a ring which engage the annular grooves (107) of the two coupling portions (101,102) comprising the beveled surfaces (113'), with a two-armed lever (115) arranged on one or the other coupling portion (101,102) being associated to each of the annular portions, which levers (115) forming the holding elements, with the short arms (116) thereof are in abutment with the respective ring portion, and with the long arms (117) thereof being clamped against the coupling portion on which they are arranged.

8. A coupling according to claim 7, characterized in that loaded springs (128) are provided between the long arms (117) of levers (115) and the coupling portion (101 or 102) on which they are located.

9. A coupling according to claim 7, characterized in that a ring (127) withdrawable in the axial direction is arranged between the long arms (117) of the levers (115) and the coupling portion (101 or 102) on which they are located.

## Revendications

1. Accouplement de sécurité de séparation d'urgence constitué par deux parties d'accouplement (2, 3) pouvant être accouplées, configurées comme une vanne, qui présentent, dans la zone de connexion, une surface chanfreinée (13') chacune, lesquelles surfaces (13') sont convergentes ensemble vers l'extérieur pour l'appui d'éléments de serrage (14) de forme adaptée correspondante, présentant des surfaces chanfreinées (18') de manière correspondante, éléments de serrage qui sont maintenus en position de serrage sur les deux parties d'accouplement (2, 3) par des éléments de retenue pouvant être desserrés,
caractérisé en ce
que les éléments de serrage (14) sont formés par au moins deux parties d'anneau qui forment un anneau qui s'engrènent dans des rainures annulaires (13), présentant les surfaces chanfreinées (13'), des deux parties d'accouplement (2, 3) et qui sont entourées par un anneau de retenue et de serrage (15) formant les éléments de retenue (HE), pouvant être retiré axialement des parties d'anneau, anneau de retenue et de serrage qui est pourvu de deux éléments de détente (16), fixés diamétralement sur lui, qui sont guidés par des éléments de guidage (17) sur l'une des parties d'accouplement (2, 3).

2. Accouplement selon la revendication 1,
caractérisé en ce
que les parties d'anneau qui forment les éléments de serrage (14) sont pourvues de chanfreins (19) dans la zone de leurs extrémités (14') sur la périphérie intérieure.

3. Accouplement selon la revendication 1 ou 2,
caractérisé en ce
que les parties d'anneau qui forment les éléments de serrage (14) sont pourvues chacune d'une rainure d'enclenchement (20) pour l'engrènement de billes d'enclenchement (21) chargées par ressort, réparties régulièrement sur la périphérie de l'anneau de retenue et de serrage (15).

4. Accouplement selon l'une des revendications 1 à 3,
caractérisé en ce
que l'anneau de retenue et de serrage (15) est pourvu, vers le côté de retrait axial, d'un flanc latéral chanfreiné (22).

5. Accouplement selon l'une des revendications 1 à 4,
caractérisé en ce
qu'au moins deux leviers de détente (113) agissant dans le sens axial sont placés sur l'anneau de retenue et de serrage (15, 111) en correspondance diamétrale et que les éléments de détente (16, 123) sont fixés sur les leviers de détente (113).

6. Accouplement de sécurité de séparation d'urgence, constitué par deux parties d'accouplement (101, 102) pouvant être accouplées, configurées comme une vanne, qui présentent, dans la zone de connexion, une surface chanfreinée (113') chacune, lesquelles surfaces (113') sont convergentes ensemble vers l'extérieur pour l'appui d'éléments de serrage (114) de forme adaptée correspondante, présentant des surfaces chanfreinées (118') de manière correspondante, éléments de serrage qui sont maintenus en position de serrage sur les deux parties d'accouplement (101, 102) par des éléments de retenue pouvant être desserrés,
caractérisé en ce
que les éléments de serrage (114) sont formés par au moins deux parties d'anneau qui forment un anneau qui s'engrènent dans des rainures annulaires (107), présentant les surfaces chanfreinées (113'), des deux parties d'accouplement (101, 102) et qui sont entourées par un anneau de retenue et de serrage (111) formant les éléments de retenue dans lequel des billes placées chargées par ressort (114') maintiennent les parties d'anneau en position de serrage sur les parties d'accouplement (101, 102).

7. Accouplement de sécurité de séparation d'urgence, constitué par deux parties d'accouplement (101, 102) pouvant être accouplées, configurées comme une vanne, qui présentent, dans la zone de connexion, une surface chanfreinée (113') chacune, lesquelles surfaces (113') sont convergentes ensemble vers l'extérieur pour l'appui d'éléments de serrage (114) de forme adaptée correspondante, présentant des surfaces chanfreinées (118') de manière correspondante, éléments de serrage qui sont maintenus en position de serrage sur les deux parties d'accouplement (101, 102) par des éléments de retenue pouvant être desserrés,
caractérisé en ce
que les éléments de serrage (114) sont formés par au moins deux parties d'anneau qui forment un anneau qui s'engrènent dans des rainures annulaires (107), présentant des surfaces chanfreinées (113'), des deux parties d'accouplement (101, 102), un levier à deux bras (115), positionné sur l'une ou l'autre partie d'accouplement (101, 102) étant affecté à chacune des parties d'anneau, lesquels leviers (115) qui forment les éléments de retenue adhèrent avec leurs bras courts (116) à la partie d'anneau respective et sont serrés avec leurs bras longs (117) contre la partie d'accouplement sur laquelle ils sont positionnés.

8. Accouplement selon la revendication 7,
caractérisé en ce
que des ressorts (128) sont placés tendus entre les longs bras (l17) des leviers (115) et la partie d'accouplement (101 ou 102) sur laquelle ils sont positionnés.

9. Accouplement selon la revendication 7,
caractérisé en ce
qu'un anneau (127) rétractable dans le sens axial est placé entre les bras longs (117) des leviers (115) et la partie d'accouplement (101 ou 102) sur laquelle ils sont positionnés.
